# NEUE EUROPÄISCHE PATENTSCHRIFT

(11) **EP 2 233 016 B2**
(45) Veröffentlichungstag und Bekanntmachung des Hinweises auf die Entscheidung über den Einspruch: **23.09.2020**
(45) Hinweis auf die Patenterteilung: 23.08.2017
(21) Anmeldenummer: 10002987.5
(22) Anmeldetag: 22.03.2010
(51) Int. Cl.: A23L 5/10, F24C 15/32

(54) **Verfahren zum Garen von Gargut mit einem Gargerät**
Method for cooking foods with a cooking device and hot air steamer for carrying out such a method
Procédé de cuisson de produit de cuisson avec un appareil de cuisson ainsi qu'amortisseur à air chaud destiné à l'exécution d'un tel procédé

(30) Priorität: 25.03.2009 DE 102009014280; 07.07.2009 DE 102009032195; 22.10.2009 DE 102009050398
(43) Veröffentlichungstag der Anmeldung: 29.09.2010
(73) Patentinhaber: Convotherm Elektrogeräte GmbH, 82436 Eglfing (DE)
(72) Erfinder: Riefenstein, Lutz, 82362 Weilheim i. OB (DE)
(74) Vertreter: Hoefer & Partner Patentanwälte mbB

(56) Entgegenhaltungen:
- DE-A1- 2 257 795
- DE-A1- 2 306 265
- DE-A1- 4 115 489
- DE-A1-102007 036 513
- DE-C1- 3 447 296
- JP-A- 2007 127 382
- US-A- 4 301 509
- US-A- 4 374 319
- US-B1- 6 381 518
- US-B2- 7 227 102

## Beschreibung

Die Erfindung betrifft ein Verfahren zum Garen von Gargut mit einem Gargerät und einen Heißluftdämpfer.

Die DD 292 367 A5 schlägt ein gewerbliches Garverfahren für Fleisch vor, wobei das Garen in drei Phasen erfolgt. In allen drei Phasen wird die Heißluftheizung intervallmäßig ausgeschaltet, wobei die Pausen in der ersten Phase maximal 20 Sekunden betragen, in der zweiten Phase 30 bis 180 Sekunden, in der dritten Phase schließlich wieder weniger als 20 Sekunden. Die erste und dritte Phase sollen jeweils etwa 1/6 bis 1/20 der gesamten Garzeit ausmachen, den Rest soll die zweite Phase ausmachen.

In der DE 22 57 795 A1 wird die Überlagerung von konvektiver Wärmeübertragung durch umgewälzte Heißluft vorgeschlagen.

Das Prinzip der Überlagerung von Heißluftumwälzung mit Strahlungsintervallen wird in der DE 23 06 265 so modifiziert, dass das Heißluftgebläse und die Luftheizkörper während der Wärmestrahlungsimpulse abgeschaltet werden.

Die DE 41 15 489 A1 schlägt eine Vorrichtung vor, welche die Heizenergie schon vor Erreichen eines eingestellten Endwertes für die Kerntemperatur abschaltet.

In der DE 10 2007 036 513 A1 wird ein Verfahren vorgestellt, bei welchem das Heizen 1K vor einer Soll-Kerntemperatur beziehungsweise einen gewissen prozentualen Anteil vor einer berechneten Garendzeit beendet wird.

Die US 7,232,978 B2 offenbart ein Verfahren, bei welchem gegen Ende des Garvorgangs die Garraumtemperatur schrittweise hin zur Soll-Kerntemperatur reduziert wird.

Die DE 10 2006 057 923 A1 schlägt ein Verfahren zum Aufheizen des Garraums vor.

Der hier vorliegenden Erfindung liegt die Aufgabe zugrunde, ein verbessertes Garverfahren zur Verfügung zu stellen.

Nach einem ersten Aspekt dieser Erfindung löst diese Aufgabe ein Verfahren mit dem Merkmalen des Patentanspruchs.

Begrifflich sei zunächst folgendes erläutert:
Die hier relevanten Garverfahren sollen insoweit "automatisiert" sein, als dass über einen Sensor ein Abbruchkriterium für den Garvorgang überwacht wird. Dies kann in vielen Fällen ein Kerntemperaturfühler sein. Auch andere Sensoren kommen in Betracht, insbesondere jedoch eine Zeitmessuhr für solche Garprozesse, welche über die Garzeit geregelt werden.

Die "Heißluftheizung" wird zur Wärmeübertragung auf das Gargut so eingesetzt, dass die Wärmeübertragung im überwiegenden Maße durch erzwungene Konvektion erfolgt. Sie ist also insbesondere nicht ein Wärmestrahler, wie zum Beispiel aus der DE 23 06 265 A1 bekannt ist. Insbesondere soll genau eine Heizungsart im Verfahren verwendet werden, nämlich die Heißluftheizung.

Als "Heißluftheizung" soll diejenige Einrichtung verstanden werden, welche maßgebend zum Aufheizen des Garraums verwendet wird. In den meisten Fällen wird dies bei den gewerblichen Gargeräten ein elektrischer Rohrheizkörper oder ein Gaswärmetauscher sein.

Der "Lüfter" hingegen sorgt für die Konvektion im Garraum, im Falle eines Heißluftdämpfers also für ein Umwälzen der Luft im Garraum, wodurch im Falle eines Heißluftdämpfers der heiße Dampf im Garraum umher transportiert wird.

Die Erfindung basiert auf einer bahnbrechenden Erkenntnis: Der Erfinder hat zahlreiche Versuche mit intervallartig pulsierender Energiezufuhr beim Garen gemacht. Hierbei hat sich herausgestellt, dass das Gargut auch ohne durchgehende Energiezufuhr ohne Zeitverlust gart.

Zwar hat auch die DD 292 367 A5 schon die Heizung intervallweise eingesetzt, jedoch wurde der Lüfter immer konstant betrieben. Nach der jetzigen Erkenntnis ist dies der Grund dafür, dass in der DD 292 367 A5 nur ein sehr geringer Anteil an Energie eingespart werden kann.

Mit dem hier vorgestellten Garverfahren hingegen konnte der Erfinder im Vergleich zu herkömmlichen Garverfahren bis zu 30% an Energie einsparen.

Interessanterweise hat sich zusätzlich gezeigt, dass sich der Garprozess gerade beim Garen von Fleisch mit pulsierender Energiezufuhr, also mit reduzierter Heizung und Lüftung, nicht verlängert.

Es versteht sich, dass selbst bei herkömmlichen Garverfahren, welche mit im Wesentlichen konstanter Garraumtemperatur arbeiten, in gewisser Weise ein "Pulsen" der Energiezufuhr vorliegt. Dies liegt daran, dass bei der Regelung einer Garraumtemperatur eine technische bedingte Hysterese auftritt. In der Praxis sind dies jedoch nur wenige Prozent der Garraumtemperatur, beispielsweise 2 % der Soll-Garraumtemperatur. Eine solch kleine, technisch bedingte Hysterese, die bei den Gargeräten üblicherweise auftritt, soll in der hier vorliegenden Patentanmeldung nicht als "Pulsieren" verstanden werden.

Bei Prototypenversuchen zur hier vorliegenden Erfindung hat sich herausgestellt, dass das Pulsieren von Heißluftheizung und Lüfter bevorzugt synchron erfolgt. Dies bedeutet, dass Heißluftheizung und Lüfter zeitgleich oder zumindest sehr zeitnah in ihren Leistungen geändert werden.

Beim Pulsieren wird zwischen Energiezufuhrimpulsen eine Pausenzeit gesetzt. In der Pausenzeit kann die Energiezufuhr entweder reduziert aufrecht erhalten oder gestoppt werden.

Die Versuche des Erfinders haben gezeigt, dass die meiste Energie eingespart werden kann, wenn während der Pausenzeit die Energiezufuhr vollständig gestoppt wird, wenn also sowohl Heißluftheizung als auch Lüfter während der Pausenzeit ausgeschaltet werden.

Schon aus Sicherheitsgründen für die Heißluftheizung mit Blick auf eine mögliche Überhitzung ist vorgesehen, dass der Lüfter immer dann läuft, wenn die Heißluftheizung eingeschaltet ist.

Gleichzeitig scheint es für das Gargut von Vorteil zu sein, wenn der Lüfter nicht ohne die Heißluftheizung läuft, denn bei aufrechterhaltener Umluft im Garraum und ausgeschalteter Heißluftheizung besteht die Gefahr, dass die Garraumtemperatur schneller abfällt und dass Energie vom Gargut abgezogen wird, was den Garprozess verlangsamen könnte.

Es hat sich als vorteilhaft herausgestellt, dass das Pulsieren nicht sofort mit dem Beginn des Garprozesses gestartet wird, sondern dass das Pulsieren erst dann begonnen wird, wenn beim Garen etwa ein Drittel bis drei Viertel einer Soll-Kerntemperatur und/oder einer Soll-Gardauer erreicht sind, insbesondere etwa die Hälfte.

Hinsichtlich der Impulsphase erfolgt das Pulsieren mit einer Pausenzeit von 2 Minuten bis 5 Minuten. Als besonders gut haben sich Pausenzeiten von 2,5 bis 3,5 Minuten bei Versuchen herausgestellt, insbesondere eine Pausenzeit von etwa 3 Minuten nach jedem Energiezufuhrimpuls.

Die Energiezufuhrdauer pro Impuls kann beispielsweise zwischen 10 Sekunden und drei Minuten betragen, bevorzugt jedoch kürzer sein als die Pausenzeit. Als besonders vorteilhaft haben sich in Versuchen Impulsdauern von einer Viertelminute bis zu einer Minute herausgestellt, insbesondere eine halbe Minute.

Der Erfinder hat sehr erfolgreiche Versuche mit Energiezufuhrdauern von etwa einer halber Minute mit Pausenzeiten von etwa drei Minuten gemacht.

Alternativ zum Regeln der Pausen über eine reine Zeitmessung wird vorgeschlagen, dass das Pulsieren der Heizung über eine softwaretechnisch vergrößerte Hysterese der Garraumtemperaturregelung geregelt wird. Als besonders geeignet hat sich herausgestellt, wenn die Regelung eine Hysterese von mindestens 5% zulässt, bevorzugt von über 10%, insbesondere von etwa 20%, der aktuellen Garraumtemperatur, bezogen auf die Soll-Garraumtemperatur.

Vorteilhaft ist es, wenn die Energiezufuhr bei mindestens 2 Kelvin unterhalb der gewünschten Soll-Kerntemperatur reduziert, ausgeschaltet oder nicht mehr eingeschaltet wird. Insbesondere soll die Energiezufuhr sogar mehr als 3 Kelvin, vor allem zwischen 3 und 5 Kelvin, vor Erreichen der Soll-Kerntemperatur reduziert, ausgeschaltet oder nicht mehr eingeschaltet.

Durch das frühe Reduzieren, insbesondere das vollständige Abschalten, der Energiezufuhr zum Gargut, nämlich deutlich vor Ende des eigentlichen Garvorgangs, kann abermals Energie eingespart werden.

Der Erfinder hat festgestellt, dass das Gargut selbst nach vollständigem Abschalten der Energiezufuhr in seinem Kern weiter Energie zugeführt bekommt. Dies geschieht über Wärmetransport von den äußeren, stärker erhitzten Bereichen des Garguts hin zum zentralen, kühleren Kern des Garguts.

Dieser Prozess ist so sicher vorhersehbar, dass bei geeigneten Rahmenbedingungen in jedem Fall die Kerntemperatur des Garguts noch um mehrere ° Kelvin ohne Zeitverlust weiter ansteigt, ohne dass von außen weitere Energie zugeführt werden muss.

Nach bisheriger Erkenntnis scheint es für das Garverfahren vorteilhaft zu sein, dass die Temperatur im Garraum nicht auf ein Niveau abfällt, welches niedriger als die Außentemperatur des Garguts ist. Dann würde das Gargut wieder Wärme an den Garraum abgeben. Solange jedoch ein Temperaturgefälle von den äußeren Bereichen des Garguts hin zum Kern existiert, fließt Wärmeenergie hin zum Kern des Garguts.

In der hier vorliegenden Erfindung wird vor allem durch zwei Verfahrensweisen Energie eingespart, einerseits durch das Pulsieren, andererseits durch das vorzeitige Abschalten der Energiezufuhr. Bei einem Kombinieren dieser Verfahrensweisen in einem dreistufigen Garverfahren addieren sich die erreichbaren Vorteile.

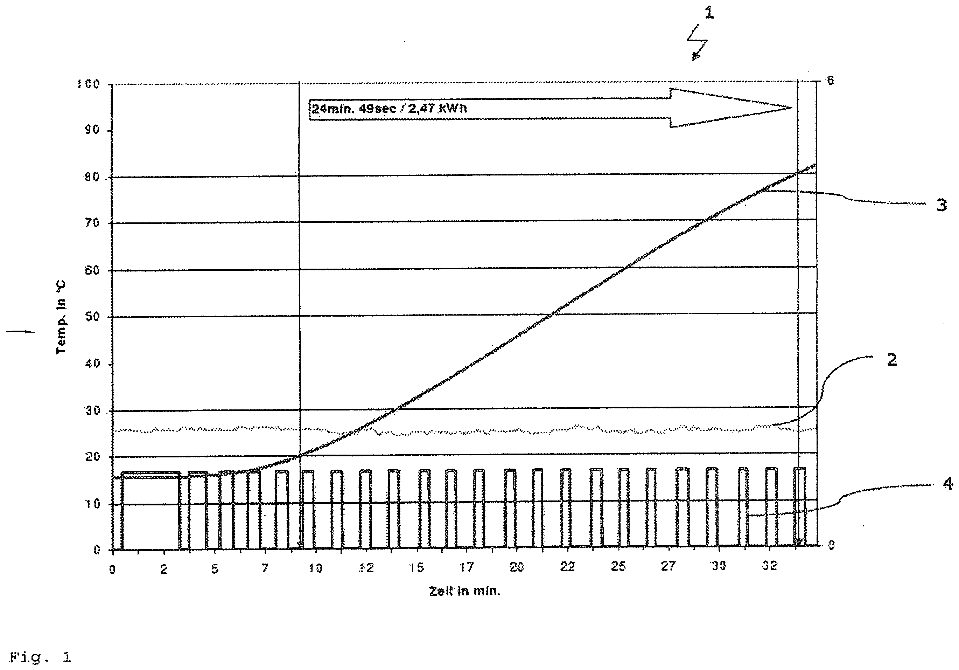

Die Erfindung wird nachstehend anhand einer Beschreibung zweier gegenübergestellter Versuche gemäß Normentwurf DIN 18873-1 näher erläutert. Hierzu zeigen
- Figur 1: einen simulierten Garprozess an feuchten Norm-Ziegelsteinen und

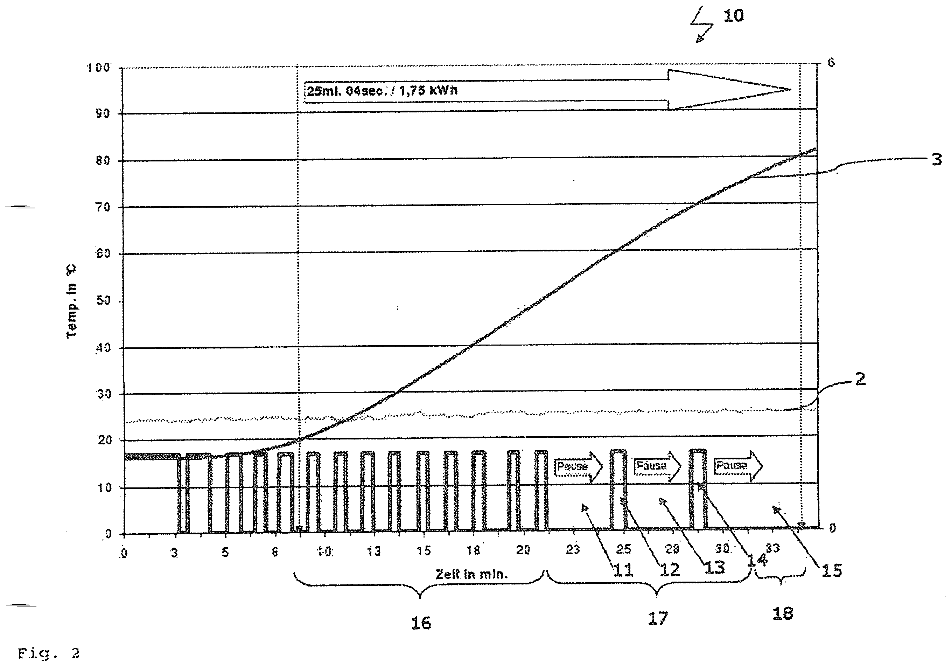

- Figur 2: zum Vergleich einen simulierten Garprozess unter Einsatz der Erfindung an identischen feuchten Norm-Ziegelsteinen.

In einem ersten Diagramm 1 sind Messwerte aus einem ersten Versuch aufgetragen. Es wurden Norm-Ziegelsteine, genauer ein Hipor-Steine, einem Erwärmungsprozess unterworfen, der einen Garprozess simuliert.

Gemessen wurden die umgebende Raumtemperatur des Gargeräts, aufgetragen auf einer Kurve 2, sowie die Temperatur in einer Mitte des Normsteins, aufgetragen auf einer Kurve 3.

Zusätzlich wurde in einer Kurve 4 dargestellt, ob die Energiezufuhr, also Heißluftheizung und Lüfter, eingeschaltet waren (Sprung der Kurve 4 nach oben) oder ausgeschaltet waren (Sprung der Kurve 4 auf Null).

Die Abszisse zeigt die Zeit des Versuchs in Minuten. Die beiden Temperaturkurven 2, 3 sind auf der Ordinate in °C aufgetragen.

Die Garraumtemperatur wurde im Wesentlichen konstant gehalten. Erkennbar ist dies daran, dass die Energiezufuhr über den gesamten Zeitraum kontinuierlich taktete, nämlich ungefähr mit 30 Sekunden Heizzeit und 60 Sekunden Pause im Wechsel. Der Lüfter war die ganze Zeit in Betrieb.

Die erforderliche Garzeit von einer Kerntemperatur des Steins in Höhe von 21 °C bis zu einer Erhöhung auf 81 °C betrug 24 Minuten und 49 Sekunden. Insgesamt wurden 2,47 kWh an Energie verwendet.

Im zweiten Versuch wurden mehrere identische, feuchte Norm-Ziegelsteine verwendet. Die umgebende Raumtemperatur beim Versuch war praktisch gleich wie zuvor. Sie ist im zweiten Diagramm 10 auf der praktisch gleichen Kurve 2 über die Versuchsdauer aufgetragen.

Im zweiten Versuch wurde allerdings nach einer anfänglich identischen Heißluftheizungsschaltung (etwa 21,5 Minuten lang), also etwa 12,5 Minuten nach Erreichen der 21 °C-Marke in der Kerntemperatur 3', zu einer pulsierenden Energiezufuhr übergegangen. Konkret wurde in einer ersten Pause 11 die Energiezufuhr, also sowohl Heißluftheizung als auch Lüfter, für etwa drei Minuten ausgesetzt. Nach einem darauf folgenden ersten Energiezufuhrimpuls 12 wurde eine zweite Pause 13 von etwa drei Minuten Pausendauer eingelegt. Daraufhin ist ein weiterer Energiezufuhrimpuls 14 von etwa einer halben Minute Dauer geschaltet worden.

Anschließend wurde in einer Restgarzeit 15 keine Energie mehr zugeführt, also Heißluftheizung und Lüfter angehalten. Diese Phase betrug knapp über 5 Minuten.

Der Verlauf 3' der Kerntemperatur im zweiten Versuch zeigt, dass die Kerntemperatur trotz der deutlich verringerten Energiezufuhr nach Abschluss einer ersten Garphase 16 auch in einer zweiten Garphase 17 und einer dritten Garphase 18 nach wie vor unvermindert anstieg, wobei in der Garphase 18 keinerlei Energie mehr zugeführt wurde. Im zweiten Versuch dauerte der Anstieg der Kerntemperatur von 21 °C auf 81 °C genau 25 Minuten und 4 Sekunden. Dies liegt nur 15 Sekunden über dem ursprünglichen Versuch.

Der simulierte Garprozess mit den feuchten Norm-Ziegelsteinen hat also in beiden Versuchen zu praktisch gleicher Gardauer geführt.

Beim Einsatz von organischem Gargut, insbesondere beim Garen von Fleisch, hat sich in Versuchen sogar gezeigt, dass mit einem pulsierenden Garverfahren die Garzeit verkürzt werden kann, also Zeit eingespart werden kann.

Selbst mit den Norm-Ziegelsteinen wurde allerdings eine erhebliche Energieeinsparung erreicht: Im zweiten Versuch, dargestellt in Diagramm 10, wurden nur knapp 71 % der Energie aus dem ersten Versuch, dargestellt im Diagramm 1, benötigt.

Im Garverfahren mit pulsierender Energiezufuhr und früherer Abschaltung konnten damit ca. 30 % der gesamten notwendigen Garenergie eingespart werden.

Es wurde nicht nur Energie bei gleicher Gardauer eingespart, sondern es ist als Nebeneffekt mehr Feuchtigkeit im Norm-Ziegelstein verblieben. Dies ist nicht nur für gewerbliche Garunternehmen relevant, welche hierdurch eine größere Masse an Produkt erhalten können und das Produkt nach Masse verkaufen, vielmehr wird auch der Wasserverbrauch gesenkt, denn im Abfluss des Gargeräts muss weniger Abwasser heruntergekühlt werden.

Im vorgestellten Vergleichsversuch wurden sämtliche Erfindungsaspekte kombiniert angewendet:

In der ersten Garphase 16 wurde der Garraum konventionell auf einer vorgewählten Temperatur gehalten, mit nur technisch bedingter Hysterese. In der zweiten Phase 17 wurden Heißluftheizung und Lüfter synchron nur noch periodisch eingeschaltet, in einigen Versuchen mit einer Pausenzeit von etwa 3 Minuten, in anderen Versuchen mit einer größeren Hysterese von zirka 20 %. In der dritten Phase 18 schließlich wurde die Energiezufuhr, also Heißluftheizung und Lüfter, nicht mehr eingeschaltet.

Die zweite Phase 17 wurde nach etwa der Hälfte der zu erwartenden Gardauer begonnen.

Hier wäre es auch ohne weiteres denkbar gewesen, die zweite Phase dann einzuleiten, wenn die gemessene Kerntemperatur ein bestimmtes Verhältnis zur Soll-Kerntemperatur annimmt, beispielsweise die Hälfte der Soll-Endkerntemperatur.

Die vorliegenden Erfindungsaspekte lassen sich sowohl in Gargeräten mit Kerntemperaturfühler als auch in Gargeräten ohne Kerntemperaturfühler hervorragend einsetzen. Bei einem Gargerät ohne Temperaturfühler dient die vorgesehene Garzeit als Maßgabe für die Einleitung der Phasen.

In der Praxis gibt es verschiedene Regelkriterien für den Garprozess, zum Beispiel Zeit, Kerntemperatur und/oder eine bestimme Gaskonzentration.

So lässt sich - wie bereits dargelegt - bei jedem Garverfahren eine pulsierende Phase der Energiezufuhr nach einem bestimmten Verhältnis zur Soll-Kerntemperatur oder nach einer bestimmten Zeit oder nach einer bestimmten Gaskonzentration einleiten.

Warum mit den hier vorgestellten Verfahren eine so erhebliche Menge an Energie eingespart werden kann, lässt sich wie folgt erklären:

Abhängig von Größe und Substanz des Garguts ist eine bestimmte Menge Energie notwendig, um dieses Gargut zu garen. Diese Energie kann bei einem Heißluftdämpfer oder einem Heißumluftgerät am effektivsten bei hoher Luftgeschwindigkeit und Temperatur auf das Gargut übertragen werden. Als Garkriterium wird vorzugsweise die Kerntemperatur verwendet. Wenn die notwenige Menge Energie in die äußeren Schichten des Garguts eingebracht ist, genügt das Temperaturgefälle innerhalb des Garguts, um den Kern auf die gewünschte Soll-Kerntemperatur zu erwärmen. In dieser zweiten Phase des Garvorgangs kann die Energiezufuhr auf das Gargut deutlich verringert werden. Es sollte in dieser Phase nur verhindert werden, dass das Gargut wieder Wärme an seine Umgebung abgibt.

Hinsichtlich des vorzeitigen Abschaltens der Energiezufuhr hat sich bei Fleisch herausgestellt, dass dies bereits 3 bis 5 Kelvin unterhalb der gewünschten Soll-Kerntemperatur erfolgen kann.

In der ersten Phase des Garprozesses, die beispielsweise bis zur Hälfte der gewünschten Soll-Kerntemperatur dauern kann, also bis zum Beispiel 30 °C bis 35 °C, werden an der Fleischoberfläche zudem bei relativ großer Energiezufuhr die Poren geschlossen, was ein verstärktes Austreten des Fleischsaftes verhindern kann.

Somit führt die hier vorgestellte Erfindung zu einer Erhöhung des Kochwirkungsgrads, zu einer Energieeinsparung bei gleicher oder sogar kürzerer Gardauer und zu einer Verringerung des Masseverlustes.

## Patentansprüche

1. Verfahren zum Garen von Gargut mit einem Gargerät, wobei das Gargerät eine Heißluftheizung oder Dampfheizung und einen Lüfter aufweist und das Verfahren die Heizung und den Lüfter zum Garen einsetzt, wobei während des Garens die Heizung und der Lüfter pulsierend eingeschaltet werden, wobei das Pulsieren von Heizung und Lüfter synchron erfolgt und das Pulsieren begonnen wird, sobald beim Garen etwa ein Drittel bis drei Viertel einer Soll-Kerntemperatur und/oder einer Soll-Gardauer erreicht ist und das Pulsieren mit einer Pausenzeit von 2 bis 5 Minuten erfolgt oder das Pulsieren über eine technisch vergrößerte Regelhysterese auf mindestens 5 % der Soll-Garraumtemperatur geregelt wird, bevorzugt auf über 10 %, insbesondere auf etwa 20 %.

2. Verfahren nach einem der vorhergehenden Ansprüche, ***dadurch gekennzeichnet, dass*** während der Pausenzeit die Energiezufuhr gestoppt wird oder reduziert aufrechterhalten wird.

3. Verfahren nach einem der vorhergehenden Ansprüche zum Garen von Gargut mit einem Gargerät unter Regelung anhand einer Ist-Kerntemperatur ***dadurch gekennzeichnet, dass*** eine Energiezufuhr bei 3 bis 5 K vor Erreichen einer Soll-Kerntemperatur reduziert wird.

4. Verfahren nach Anspruch 3, ***dadurch gekennzeichnet, dass*** die Energiezufuhr zu diesem Zeitpunkt gestoppt wird, bis das Garen abgeschlossen ist.

## Claims

1. Method for cooking food that is to be cooked with a cooking device, wherein the cooking device is equipped with a hot air heater or steam heater and a fan, that the method utilises the heat and the fan for cooking, wherein the heater and the fan are switched on in pulsed sequence during cooking, wherein the pulsed activation of the heater and the fan takes place synchronously and pulsing is begun as soon as a core temperature and/or a cooking duration reaches a value from about one third to three quarters of a target core temperature or cooking duration, and the pulsation takes place with a pause time from 2 to 5 minutes or the pulsation is regulated by a technically extended adjustment hysteraesis to at least 5%, preferably to more than 10%, particularly to about 20% of the target cooking space temperature.

2. Method according to the preceding claim, ***characterized in that*** the supply of energy is stopped or maintained at a reduced level during the pause time.

3. Method according to either of the preceding claims for cooking food that is to be cooked with a cooking device by means of a control with reference to an actual temperature, ***characterized in that*** a supply of energy is reduced when a temperature 3 to 5 K below a target core temperature is reached:

4. Method according to claim 3, ***characterized in that*** the supply of energy is stopped at that time until cooking is completed.

## Revendications

1. Procédé de cuisson de produit de cuisson avec un appareil de cuisson, l'appareil de cuisson comportant un chauffage à air chaud ou un chauffage à la vapeur et un ventilateur et le procédé utilisant le chauffage et le ventilateur pour la cuisson, le chauffage et le ventilateur étant en marche en mode pulsé pendant la cuisson, la pulsation du chauffage et du ventilateur ayant lieu de façon synchronisée et la pulsation étant commencée dès qu'environ un tiers à un quart d'une température à cœur théorique et/ou d'une durée de cuisson théorique est atteinte lors de la cuisson et la pulsation ayant lieu avec un temps de pause de 2 à 5 minutes ou la pulsation étant réglée par le biais d'une hystérésis de régulation techniquement amplifiée à au moins 5% de la température théorique de l'espace de cuisson, de préférence au-dessus de 10%, notamment à environ 20%.

2. Procédé selon la revendication précédente, ***caractérisé en ce que*** pendant le temps de pause l'apport en énergie est arrêté ou maintenu réduit.

3. Procédé selon l'une quelconque des revendications précédentes pour la cuisson de produit de cuisson avec un appareil de cuisson avec régulation à l'aide d'une température à cœur réelle ***caractérisé en ce qu**'un* apport en énergie est réduit à 3 à 5 K avant d'atteindre une température à cœur théorique.

4. Procédé selon la revendication 3, ***caractérisé en ce que* l**'apport en énergie est arrêté à ce point jusqu'à ce que la cuisson soit terminée.
